# EUROPÄISCHE PATENTSCHRIFT

(11) **EP 2 201 696 B1**
(45) Veröffentlichungstag und Bekanntmachung des Hinweises auf die Patenterteilung: **11.07.2018**
(21) Anmeldenummer: 08775087.3
(22) Anmeldetag: 15.07.2008
(51) Int. Cl.: H04B 1/69, G01V 3/12

(54) **ULTRABREITBANDSENDEEINHEIT**
ULTRA-WIDEBAND TRANSMITTER UNIT
UNITÉ ÉMETTRICE À BANDE ULTRA-LARGE

(30) Priorität: 12.09.2007 DE 102007043488
(43) Veröffentlichungstag der Anmeldung: 30.06.2010
(73) Patentinhaber: Robert Bosch GmbH, 70442 Stuttgart (DE)
(72) Erfinder: KRAPF, Reiner, 72770 Reutlingen (DE); BRAUN, Heiko, 70178 Stuttgart (DE); MAHLER, Michael, 70771 Leinfelden-Echterdingen (DE)
(86) Internationale Anmeldenummer: PCT/EP2008/059228
(87) Internationale Veröffentlichungsnummer: WO 2009/033856

(56) Entgegenhaltungen:
- DE-A1-102005 052 369
- DE-A1-102006 002 666
- US-B1- 6 348 773
- NAKACHE Y-P ET AL: "Spectral shape of UWB signals - influence of modulation format, multiple access scheme and pulse shape" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, Bd. 4, 22. April 2003 (2003-04-22), Seiten 2510-2514, XP010862289 ISBN: 978-0-7803-7757-8

## Beschreibung

### Stand der Technik

Die Erfindung geht aus von einer Ultrabreitbandsendeeinheit nach dem Oberbegriff des Anspruchs 1.

Es sind bereits Ultrabreitbandsendeeinheiten für Handwerkzeugmaschinen, insbesondere für Sensorgeräte, bekannt, wobei die Ultrabreitbandsendeeinheiten dazu vorgesehen sind, ein Sendesignal mit einem Linienspektrum auszusenden, beispielsweise aus DE 10 2005 052 369 A1 oder DE 10 2006 002 666 A1.

### Vorteile der Erfindung

Die Erfindung geht aus von einer Ultrabreitbandsendeeinheit für eine Handwerkzeugmaschine, insbesondere für ein Sensorgerät, wobei die Ultrabreitbandsendeeinheit dazu vorgesehen ist, ein Sendesignal mit einem Linienspektrum auszusenden. Die Erfindung wird durch die beiliegenden Ansprüche definiert. Es wird vorgeschlagen, dass die Ultrabreitbandsendeeinheit eine Einstelleinheit umfasst, die dazu vorgesehen ist, eine Position zumindest einer Spektrallinie des Linienspektrums einzustellen, wobei unter einem Linienspektrum insbesondere ein Frequenzspektrum verstanden werden soll, das diskrete Spektrallinien aufweist, die insbesondere in einem Bereich eines Radiodienstes liegen. Unter einer "Position" soll in diesem Zusammenhang insbesondere eine Position einer mittleren Frequenz der entsprechenden Linie verstanden werden. Unter "vorgesehen" soll insbesondere speziell ausgestattet, ausgelegt und/oder programmiert verstanden werden. Durch eine Einstellung der Position der Spektrallinie kann vermieden werden, dass sich die Spektrallinie mit einem Signal eines Radiodienstes überschneidet und somit das Signal des Radiodienstes stört. Vorteilhafterweise wird dadurch auch vermieden, dass das Signal des Radiodienstes die Ultrabreitbandsendeeinheit stört. Unter einem "Radiodienst" sollen in diesem Zusammenhang insbesondere aktive und/oder passive Radiodienste verstanden werden, der ein Nutzungsrecht für ein Frequenzspektrum besitzen, wie beispielsweise GSM-Dienste, UMTS-Dienste, meteorologische Radiodienste, TV- und Hörfunkdienste und/oder Radardienste.

Vorteilhafterweise ist die Einstelleinheit dazu vorgesehen, eine Position der Spektrallinie einzustellen, die außerhalb des Signals des Radiodienstes liegt. Unter "außerhalb" soll in diesem Zusammenhang insbesondere verstanden werden, dass ein Abstand der Spektrallinie und der Störlinie größer ist als die Summe der halben Linienbreite der Spektrallinie und der halben Linienbreite des Signals des Radiodienstes. Dadurch wird vermieden, dass sich das Signal des Radiodienstes und die Spektrallinien überlagern und nicht mehr getrennt werden können. Unter einer Linienbreite soll in diesem Zusammenhang insbesondere eine Halbwertsbreite der entsprechenden Linie verstanden werden.

Ferner ist die Einstelleinheit dazu vorgesehen, eine Position zumindest einer zweiten Spektrallinie einzustellen. Dadurch kann eine Störung des Radiodienstes besonders effektiv minimiert werden.

Dabei wird vorgeschlagen, dass die Einstelleinheit dazu vorgesehen ist, eine Position der zweiten Spektrallinie einzustellen, in der die Position des Signals des Radiodienstes im Wesentlichen in der Mitte zwischen der ersten Spektrallinie und der zweiten Spektrallinie liegt. Unter "im Wesentlichen" soll in diesem Zusammenhang insbesondere verstanden werden, dass eine Position des Signals des Radiodienstes um weniger als 10% des Abstands der beiden Spektrallinien von einer exakten Mittelposition abweicht, wobei ein Wert kleiner als 5% vorteilhaft und ein Wert gleich Null besonders vorteilhaft ist. Eine solche Position des Signals des Radiodienstes ist besonders vorteilhaft, da dann ein Abstand des Signals des Radiodienstes zu benachbarten Spektrallinien besonders groß wird.

Die Einstelleinheit ist dazu vorgesehen, die Position der zweiten Spektrallinie unabhängig von der Position der ersten Spektrallinie einzustellen, wodurch die Positionen der ersten und zweiten Spektrallinie besonders einfach so eingestellt werden können, dass die Position des Signals des Radiodienstes im Wesentlichen in der Mitte zwischen der ersten Spektrallinie und der zweiten Spektrallinie liegt.

Ferner ist die Einstelleinheit vorteilhafterweise dazu vorgesehen, einen Abstand zwischen der ersten Spektrallinie und zumindest einer weiteren Spektrallinie einzustellen, der größer ist als eine Linienbreite eines Signals eines Radiodienstes. Dadurch kann eine Störung des Radiodienstes besonders einfach vermieden werden. Der Abstand zwischen den Spektrallinien kann besonders einfach eingestellt werden, wenn die Positionen der Spektrallinien unabhängig von einander eingestellt werden können. Grundsätzlich ist es aber auch möglich, einen Abstand zwischen zwei Spektrallinien einzustellen, wenn die Spektrallinien nur gemeinsam aber um unterschiedliche Beträge verschoben werden können.

Erfindungsgemäß ist das Sendesignal als ein repetierendes Pulssignal, das eine Pulswiederholfrequenz aufweist, ausgebildet. Unter einem "repetierenden Pulssignal" soll insbesondere ein Signal verstanden werden, das Pulse aufweist, die in einem regelmäßigen Abstand gesendet werden. Bei einem solchen Sendesignal können die Abstände der Spektrallinien einfach verschoben werden, indem die Pulswiederholfrequenz verändert wird. Zusätzlich können bei einem solchen Signal die absoluten Positionen der Spektrallinien gemeinsam verschoben werden, wenn die Ultrabreitbandsendeeinheit einen Modulator aufweist, der dazu vorgesehen ist, das repetierende Pulssignal zu modulieren. Dadurch lässt sich eine unabhängige Einstellung der Positionen zweier Spektrallinien einfach realisieren.

Ebenfalls vorteilhaft ist, wenn das Sendesignal als ein Pseudo-Noise-Signal, das eine Zeitdauer einer sich wiederholenden Pseudo-Noise-Sequenz aufweist, ausgebildet ist. Unter einem "Pseudo-Noise-Signal" soll insbesondere ein Signal verstanden werden, das eine sich periodisch wiederholende Sequenz aufweist. Bei einem solchen Sendesignal ist der Abstand der Spektrallinien ebenfalls einfach einstellbar, weshalb ein solches Sendesignal vorteilhaft als eine Alternative oder als eine Ergänzung zu dem repetierenden Pulssignal verwendet werden kann. Auch bei dem Pseudo-Noise-Signal kann die Position der Spektrallinien mittels eines Modulators verschoben werden, wodurch eine unabhängige Einstellung der Positionen zweier Spektrallinien realisierbar ist.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematischen Aufbau einer Sendeeinheit,
- Fig. 2: ein Frequenzspektrum mit einem Linienspektrum eines Senders und mit einem Signal eines Radiodienstes,
- Fig. 3: ein Frequenzspektrum, bei dem das Signal des Radiodienstes zwischen zwei Spektrallinien liegt und
- Fig. 4: ein Frequenzspektrum, bei dem das Signal des Radiodiensts in der Mitte zwischen zwei Spektrallinien liegt.

### Beschreibung der Ausführungsbeispiele

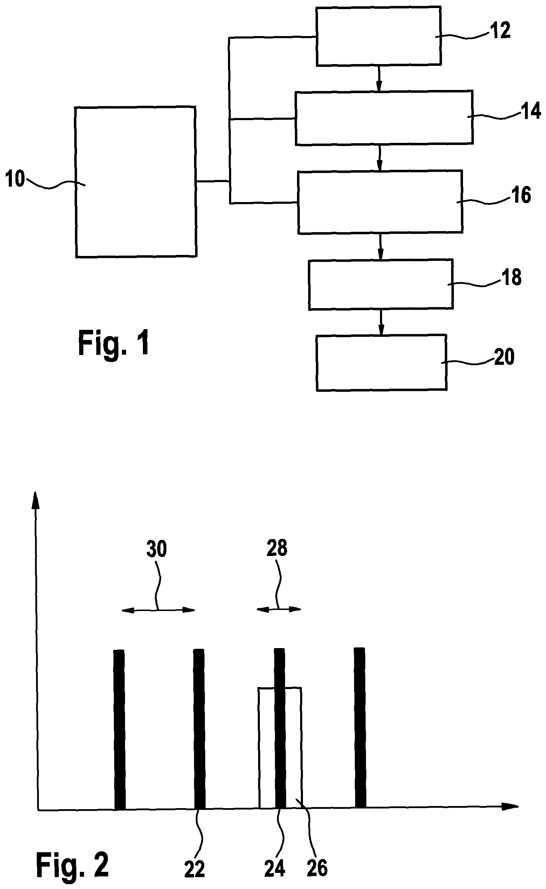

Figur 1 zeigt schematisch den Aufbau einer Ultrabreitbandsendeeinheit eines nicht näher dargestellten Sensorgeräts, das zur Untersuchung von Flächen, wie beispielsweise von Wand- und/oder Bodenflächen, vorgesehen ist. Die Ultrabreitbandsendeeinheit sendet ein Sendesignal aus, das ein Frequenzspektrum mit einem Linienspektrum aufweist. Das Sendesignal wird von Strukturen unterhalb der Fläche reflektiert und ein reflektiertes Signal wird mittels einer nicht näher dargestellten Empfangseinheit detektiert. Aus dem reflektierten Signal kann dann mittels einer Auswerteelektronik auf die Strukturen unterhalb der Fläche geschlossen werden, die dann auf einem Display des Sensorgeräts dargestellt werden können.

Das Sendesignal, das die Ultrabreitbandsendeeinheit aussendet, ist als ein repetierendes Pulssignal, das eine Pulswiederholfrequenz aufweist, ausgebildet. Die Ultrabreitbandsendeeinheit umfasst eine Frequenzvorgabeeinheit 12, die eine Grundfrequenz vorgibt und beispielsweise durch einen Mikrocontroller, einen Quarz oder einen PLL gebildet sein kann. Die Grundfrequenz, die von der Frequenzvorgabeeinheit 12 generiert wurde, wird an eine Signalerzeugeeinheit 14 weitergeleitet, die aus der Grundfrequenz ein gepulstes Signal erzeugt. Die Signalerzeugeeinheit 14 kann beispielsweise durch eine Step-Recovery-Diode, einen Transistor und/oder andere, dem Fachmann als sinnvoll erscheinende Bauteile ausgestaltet sein. Anschließend wird das Signal an einen Modulator 16 weitergeleitet. Das modulierte Signal kann über Passivbauteile 18, wie beispielsweise Filter, Teiler, Koppler, Balun usw., nochmals verändert und angepasst werden und wird anschließend über eine Antenne 20 abgestrahlt.

Bei dem als repetierendes Pulssignal ausgebildeten Sendesignal kann ein Abstand 30 von Spektrallinien 22, 24 des Linienspektrums mittels einer Veränderung der Pulswiederholfrequenz verändert werden, wobei der Abstand 30 grundsätzlich sowohl vergrößert als auch verkleinert werden kann. Eine Position der Spektrallinien 22, 24 ist über eine Modulation des Sendesignals, die mittels des Modulators 16 erfolgt, einstellbar. Um die Position und den Abstand 30 der Spektrallinien 22, 24 zu verändern, umfasst die Ultrabreitbandsendeeinheit eine Einstelleinheit 10, die auf die Frequenzvorgabeeinheit 12, die Signalerzeugeeinheit 14 und den Modulator 16 wirken kann. Durch die Einstellung des Abstands 30 und durch die gemeinsame Einstellung der Positionen der Spektrallinien 22, 24 ist es möglich, die Position der ersten Spektrallinie 22 unabhängig von der Position der zweiten Spektrallinie 24 einzustellen.

Ein Frequenzspektrum, in dem eine der Spektrallinien 24 des Sendesignals mit einem Signal eines Radiodienstes 26 zusammenfällt, ist in Figur 2 gezeigt. Durch das Sendesignal wird das Signal des Radiodienstes 26 gestört. In dem gezeigten Frequenzspektrum weisen die Spektrallinien 22, 24 und das Signal des Radiodienstes 26 eine Rechteckform auf, weshalb eine Halbwertsbreite gleich einer Gesamtbreite ist.

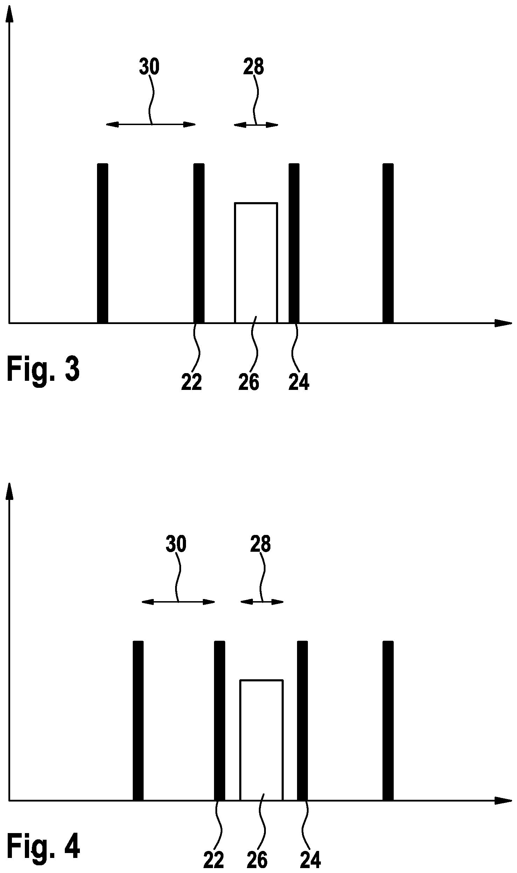

Um eine Störung des Signals des Radiodienstes 26 zu minimieren, wurde die Position der Spektrallinie 22 und der Spektrallinie 24 mittels der Einstelleinheit 10 so eingestellt, dass die Spektrallinien 22, 24 außerhalb des Signals des Radiodienstes 26 liegen (Figur 3). Außerdem wurde durch die Einstelleinheit 10 mittels des Modulators 16 der Abstand 30 zwischen der Spektrallinie 22 und der Spektrallinie 24 so eingestellt, dass er größer ist als eine Linienbreite 28 des Signals des Radiodienstes 26.

Figur 4 zeigt ein Frequenzspektrum, bei dem im Vergleich zu Figur 2 der Abstand 30 der Spektrallinien 22, 24 beibehalten wurde. Durch die Einstelleinheit 10 wurden die Spektrallinien 22, 24 gemeinsam um einen gleichen Betrag verschoben, wodurch das Signal des Radiodienstes 26 im Wesentlichen in der Mitte zwischen den zwei Spektrallinien 22, 24 liegt. Der Abstand 30 ist größer als die Linienbreite 28 des Signals des Radiodienstes 26.

Die Ultrabreitbandsendeeinheit kann alternativ oder zusätzlich ein Sendesignal aussenden, das als ein Pseudo-Noise-Signal mit einer Zeitdauer einer sich wiederholenden Pseudo-Noise-Sequenz ausgebildet ist. Durch die Frequenzvorgabeeinheit 12 werden dann eine Modulationsfrequenz und die Zeitdauer des Pseudo-Noise-Signals vorgegeben. Anschließend wird durch die Signalerzeugeeinheit 14 eine Pseudo-Noise-Sequenz erzeugt, die anschließend mittels des Modulators 16 moduliert werden kann. Die Signalerzeugeeinheit 14 und der Modulator 16 können auch einstückig ausgeführt sein und könnten dann beispielsweise einen FPGA-Schaltkreis oder einen IC umfassen. Das modulierte Signal kann über die Passivbauteile 18 nochmals verändert und angepasst werden und wird anschließend über die Antenne 20 abgestrahlt.

Bei dem als Pseudo-Noise-Signal ausgebildeten Sendesignal kann der Abstand 30 der Spektrallinien 22, 24 mittels einer Veränderung der Zeitdauer verändert werden, wobei der Abstand 30 grundsätzlich sowohl vergrößert als auch verkleinert werden kann. Die Position ist wiederum über eine Modulation des Sendesignals einstellbar.

## Patentansprüche

1. Ultrabreitbandsendeeinheit für eine Handwerkzeugmaschine, insbesondere für ein Sensorgerät, wobei die Ultrabreitbandsendeeinheit dazu vorgesehen ist, ein Sendesignal mit einem Linienspektrum auszusenden, das diskrete Spektrallinien aufweist, indem das Sendesignal als ein repetierendes Pulssignal mit einer Pulswiederholfrequenz ausgebildet ist, mit einer Einstelleinheit (10), die dazu vorgesehen ist, die Position zumindest einer ersten Spektrallinie (22) und zumindest einer zweiten Spektrallinie (24) des Linienspektrums einzustellen und mit einem Modulator, der dazu vorgesehen ist, das repetierende Pulssignal zu modulieren, **dadurch gekennzeichnet, dass** die Einstelleinheit (10) dazu vorgesehen ist, die Position der zweiten Spektrallinie (24) unabhängig von der Position der ersten Spektrallinie (22) einzustellen, indem die Pulswiederholfrequenz verändert wird und/oder das repetierende Pulssignal mittels des Modulators moduliert wird.

2. Ultrabreitbandsendeeinheit nach Anspruch 1, **dadurch gekennzeichnet, dass** die Einstelleinheit (10) dazu vorgesehen ist, die Position der ersten Spektrallinie (22) einzustellen, die außerhalb eines Signals eines Radiodienstes (26) liegt.

3. Ultrabreitbandsendeeinheit nach einem der vorhergehenden Ansprüche, **dadurch gekennzeichnet, dass** die Einstelleinheit (10) dazu vorgesehen ist, einen Abstand (30) zwischen der mindestens ersten (22) und zweiten Spektrallinie (24) einzustellen, der größer ist als eine Linienbreite (28) eines Signals eines Radiodienstes (26).

4. Ultrabreitbandsendeeinheit nach einem der vorhergehenden Ansprüche, **dadurch gekennzeichnet, dass** die Einstelleinheit (10) dazu vorgesehen ist, eine Position zumindest der ersten (22) und zweiten (24) Spektrallinien so einzustellen, dass ein Signal eines Radiodienstes (26) im Wesentlichen in der Mitte zwischen der ersten (22) und der zweiten Spektrallinien (24) liegt.

5. Ultrabreitbandsendeeinheit nach einem der vorhergehenden Ansprüche, **dadurch gekennzeichnet, dass** das Sendesignal als ein Pseudo-Noise-Signal, das eine Zeitdauer einer sich wiederholenden Pseudo-Noise-Sequenz aufweist, ausgebildet ist.

6. Verfahren für die Aussendung eines als repetierenden Pulssignals mit einem Pulswiederholfrequenz ausgebildeten Sendesignals mit einem Linienspektrum, das diskrete Spektrallinien aufweist, durch eine Ultrabreitbandsendeeinheit nach einem der vorhergehenden Ansprüche zur Vermeidung einer Störung eines Signals eines Radiodienstes (26),
**dadurch gekennzeichnet, dass** die Position zumindest einer ersten Spektrallinie (22) und einer zweiten Spektralllinie (24) des Linienspektrums eingestellt wird, wobei die Position der zweiten Spektrallinie (24) unabhängig von der Position der ersten Spektrallinie (22) eingestellt wird, indem die Pulswiederholfrequenz des Sendesignals verändert wird und/oder das repetierende Pulssignal mittels des Modulators moduliert wird.

7. Verfahren nach Anspruch 6, **dadurch gekennzeichnet, dass** eine Position der ersten Spektrallinie (22) eingestellt wird, die außerhalb des Signals des Radiodienstes (26) liegt.

8. Verfahren nach Anspruch 6 oder 7, **dadurch gekennzeichnet, dass** die Position der mindestens ersten (22) und zweiten Spektrallinie (24) so eingestellt wird, dass das Signal des Radiodienstes (26) im Wesentlichen in der Mitte zwischen der ersten Spektrallinie (22) und der zweiten Spektrallinie (24) liegt.

9. Verfahren nach Anspruch 6, **dadurch gekennzeichnet, dass** ein Abstand (30) der mindestens ersten und zweiten Spektrallinien (22, 24) eingestellt wird, der größer ist als eine Linienbreite (28) des Signals des Radiodienstes (26).

## Claims

1. Ultra wideband transmission unit for a hand-held machine tool, in particular for a sensor device, wherein the ultra wideband transmission unit is intended to emit a transmission signal having a line spectrum that has discrete spectral lines by virtue of the transmission signal being configured as a repeating pulse signal having a pulse repetition rate, having an adjusting unit (10) intended to set the position of at least one first spectral line (22) and at least one second spectral line (24) of the line spectrum and having a modulator intended to modulate the repeating pulse signal, **characterized in that** the adjusting unit (10) is intended to set the position of the second spectral line (24) independently of the position of the first spectral line (22) by virtue of the pulse repetition rate being altered and/or the repeating pulse signal being modulated by means of the modulator.

2. Ultra wideband transmission unit according to Claim 1, **characterized in that** the adjusting unit (10) is intended to set the position of the first spectral line (22), which is outside a signal of a radio service (26).

3. Ultra wideband transmission unit according to either of the preceding claims, **characterized in that** the adjusting unit (10) is intended to set a distance (30) between the at least one first (22) and second (24) spectral lines that is greater than a line width (28) of a signal of a radio service (26).

4. Ultra wideband transmission unit according to one of the preceding claims, **characterized in that** the adjusting unit (10) is intended to set a position of at least the first (22) and second (24) spectral lines such that a signal of a radio service (26) is substantially in the middle between the first (22) and second (24) spectral lines.

5. Ultra wideband transmission unit according to one of the preceding claims, **characterized in that** the transmission signal is configured as a pseudo-noise signal that has a duration of a recurring pseudo-noise sequence.

6. Method for emitting a transmission signal, configured as a repeating pulse signal having a pulse repetition rate, having a line spectrum that has discrete spectral lines using an ultra wideband transmission unit according to one of the preceding claims to avoid disturbing a signal of a radio service (26), **characterized in that** the position of at least one first spectral line (22) and one second spectral line (24) of the line spectrum is set, wherein the position of the second spectral line (24) is set independently of the position of the first spectral line (22) by virtue of the pulse repetition rate of the transmission signal being altered and/or the repeating pulse signal being modulated by means of the modulator.

7. Method according to Claim 6, **characterized in that** a position of the first spectral line (22) is set that is outside the signal of the radio service (26).

8. Method according to Claim 6 or 7, **characterized in that** the position of the at least one first (22) and second (24) spectral lines is set such that the signal of the radio service (26) is substantially in the middle between the first spectral line (22) and the second spectral line (24).

9. Method according to Claim 6, **characterized in that** a distance (30) between the at least one first and second spectral lines (22, 24) is set that is greater than a line width (28) of the signal of the radio service (26).

## Revendications

1. Unité émettrice à bande ultralarge pour machine outil manuelle, en particulier pour un appareil détecteur, dans lequel l'unité émettrice à bande ultralarge est prévue pour émettre un signal d'émission ayant un spectre de raies qui présente des raies spectrales discrètes, le signal d'émission étant réalisé sous la forme d'un signal impulsionnel répétitif ayant une certaine fréquence de répétition d'impulsions, comportant une unité de réglage (10) qui est conçue pour régler la position d'au moins une première raie spectrale (22) et d'au moins une seconde raie spectrale (24) du spectre de raies et comportant un modulateur qui est conçu pour moduler le signal impulsionnel répétitif, **caractérisé en ce que** l'unité de réglage (10) est conçue pour régler la position de la seconde raie spectrale (24) indépendamment de la position de la première raie spectrale (22), en faisant varier la fréquence de répétition d'impulsions et/ou en modulant le signal impulsionnel répétitif au moyen du modulateur.

2. Unité émettrice à bande ultralarge selon la revendication 1, **caractérisée en ce que** l'unité de réglage (10) est conçue pour régler la position de la première raie spectrale (22) qui se situe en dehors d'un signal d'un service radio (26).

3. Unité émettrice à bande ultralarge selon l'une des revendications précédentes, **caractérisée en ce que** l'unité de réglage (10) est conçue pour régler une distance (30) entre lesdites au moins première (22) et seconde (24) raies spectrales, laquelle distance est supérieure à une largeur de raie (28) d'un signal d'un service radio (26).

4. Unité émettrice à bande ultralarge selon l'une des revendications précédentes, **caractérisée en ce que** l'unité de réglage (10) est conçue pour régler une position d'au moins les première (22) et seconde (24) raies spectrales de manière à ce qu'un signal d'un service radio (26) se situe sensiblement au milieu entre les première (22) et seconde (24) raies spectrales.

5. Unité émettrice à bande ultralarge selon l'une des revendications précédentes, **caractérisée en ce que** le signal d'émission est réalisé sous la forme d'un signal de pseudo-bruit qui présente la durée d'une séquence de bruit pseudoaléatoire se répétant.

6. Procédé d'émission d'un signal d'émission réalisé sous la forme d'un signal impulsionnel répétitif ayant une certaine fréquence de répétition d'impulsions ayant un spectre de raies qui présente des raies spectrales discrètes, au moyen d'une unité émettrice à bande ultralarge selon l'une des revendications précédentes afin de réduire une perturbation d'un signal d'un service radio (26), **caractérisé en ce que** la position d'au moins une première raie spectrale (22) et d'une seconde raie spectrale (24) du spectre de raies est réglée, dans lequel la position de la seconde raie spectrale (24) est réglée indépendamment de la position de la première raie spectrale (22) en modifiant la fréquence de répétition d'impulsions du signal d'émission et/ou en modulant le signal impulsionnel répétitif au moyen du modulateur.

7. Procédé selon la revendication 6, **caractérisé en ce qu'**une position de la première raie spectrale (22) qui se situe en dehors du signal du service radio (26) est réglée.

8. Procédé selon la revendication 6 ou 7, **caractérisé en ce que** la position desdites au moins première (22) et seconde (24) raies spectrales est réglée de manière à ce que le signal du service radio (26) se situe sensiblement au milieu entre la première raie spectrale (22) et la seconde raie spectrale (24).

9. Procédé selon la revendication 6, **caractérisé en ce qu'**une distance (30) entre au moins lesdites au moins première et seconde raies spectrales (22, 24) qui est supérieure à une largeur de raie (28) du signal du service radio (26) est réglée.
